# FASCICULE DE BREVET EUROPEEN

(11) **EP 2 628 327 B1**
(45) Date de publication et mention de la délivrance du brevet: **25.11.2020**
(21) Numéro de dépôt: 11769850.6
(22) Date de dépôt: 10.10.2011
(51) Int. Cl.: H04W 12/02, H04L 29/06, H04B 7/185

(54) **PROCÉDÉ ET SYSTÈME POUR ÉTABLIR DYNAMIQUEMENT DES TUNNELS CHIFFRÉS SUR DES RÉSEAUX À BANDE CONTRAINTE**
VERFAHREN UND SYSTEM ZUR DYNAMISCHEN HERSTELLUNG VON VERSCHLÜSSELTEN TUNNELN BEI NETZWERKEN MIT EINGESCHRÄNKTER BANDBREITE
METHOD AND SYSTEM FOR DYNAMICALLY ESTABLISHING ENCRYPTED TUNNELS ON CONSTRAINED-BAND NETWORKS

(30) Priorité: 12.10.2010 FR 1004015
(43) Date de publication de la demande: 21.08.2013
(73) Titulaire: THALES, 92400 Courbevoie (FR)
(72) Inventeur: BILLONNEAU, Dominique, F-92704 Colombes Cedex (FR); SUARD, Nicolas, F-92704 Colombes Cedex (FR)
(74) Mandataire: Marks & Clerk France
(86) Numéro de dépôt international: PCT/EP2011/067644
(87) Numéro de publication internationale: WO 2012/049122

(56) Documents cités:
- EP-A1- 1 432 210
- anonymous: "BGAN and IP data connections Version 01", BGAN solutions guide, 8 mai 2006 (2006-05-08), XP055004203, Extrait de l'Internet: URL:http://www.inmarsat.com/downloads/engl ish/bgan/getting_started/BGAN_and_IP_data_ connections_EN.pdf [extrait le 2011-08-05]
- L DUQUERROY ET AL: "SatIPSec: An optimized solution for securing multicast and unicast satellite transmissions", A COLLECTION OF THE 22ND AIAA INTERNATIONAL COMMUNICATIONS SATELLITE SYSTEMS CONFERENCE AND EXHIBIT TECHNICAL PAPERS, 1 janvier 2004 (2004-01-01), XP055004197, ISBN: 978-1-56-347712-6
- Lloyd Wood ET AL: "IPv6 and IPsec on a satellite in space", Proceedings of the 58th International Astronautical Congress, Hyderabad, India, 24-28 September 2007, 28 septembre 2007 (2007-09-28), XP055004182, Extrait de l'Internet: URL:http://citeseerx.ist.psu.edu/viewdoc/d ownload?doi=10.1.1.153.8473&rep=rep1&type= pdf [extrait le 2011-08-04]

## Description

L'objet de l'invention concerne un procédé et une architecture système permettant d'établir de manière dynamique un ou plusieurs tunnels chiffrés sur des réseaux de communication à bande contrainte. Elle permet notamment de chiffrer un ou plusieurs flux de données tout en garantissant la qualité de services sur les systèmes à bande contrainte, en particulier pour les flux chiffrés de type voix sur IP (protocole internet) ou de type données ou en anglo-saxon Data. Ces tunnels sont ainsi adaptés au plus juste aux flux de données utiles tout en permettant de contrôler et d'affecter les valeurs nécessaires à la qualité de service ou QoS sur ces réseaux.

L'invention est, par exemple, utilisée dans des systèmes mettant en œuvre des liaisons satellites satcom de type : IP (protocole internet) ou voix sur IP en mode clair BGAN connu de l'Homme du métier, ou pour des modes connus sous l'abréviation anglo-saxonne « SwiftBroadband » et « FleetBroadband ». Elle s'applique aussi pour tous les systèmes de communication se référant à la partie de la norme de partage de médias connue sous le sigle 3GPP.

### Définitions

Dans la suite de la discussion, les abréviations suivantes et leurs définitions seront utilisées :
PDP : protocole de données paquet ou en anglo-saxon « Packet Data Protocol », un contexte PDP vient de la technologie GPRS connue de l'Homme du métier ; c'est un ensemble d'informations qui caractérise un service de transmission de base ; il regroupe des paramètres qui permettent à un abonné de communiquer avec une adresse PDP bien définie, suivant un profil de Qualité de Service déterminé (délai, priorité, débit, etc..).
RTP : protocole temps réel ou en anglo-saxon Real Time Protocol. Protocole sur IP qui permet d'identifier le type de l'information transportée, d'ajouter des marqueurs, des numéros de séquence et de contrôler l'arrivée à destination des paquets.
TFT : initiales qui désignent une série de filtres qui assurent un chemin déterminé pour des applications dont le flux est identifié par les filtres TFT abréviation en anglais de « Traffic Flow Template ». Par exemple, la technologie Inmarsat utilise des TFT.
VoIP : voix sur IP ou en anglo-saxon Voice on IP.
SIP : protocole initialisation de service ou en anglo-saxon « Session Initiation Protocol. » Ce protocole est normalisé et standardisé. Il se charge également de la négociation sur tous les types de média utilisables par les différents participants en encapsulant des messages SDP (Session Description Protocol). SIP ne transporte pas les données échangées durant la session comme la voix ou la vidéo. SIP étant indépendant de la transmission des données, tout type de données et de protocoles peut être utilisé pour cet échange. Cependant, dans la réalité actuelle, le protocole RTP assure le plus souvent les sessions audio et vidéo.

Le mot « streaming » désigne une classe de services Satcom garantissant un débit garanti (utilisé principalement pour les applications temps-réel).

Le mot « transceiver » est utilisé pour désigner un transcepteur ayant notamment pour fonction de diffuser un signal d'entrée vers plusieurs sorties.

Un appel sortant est défini comme un appel Outbound, un appel entrant comme un appel Inbound.

Les communications sur les types de réseaux à bande contrainte et, principalement, sur un satellite représentent généralement un coût élevé pour le consommateur final, et également pour les opérateurs.

De plus en plus, de nombreuses applications montrent le besoin de chiffrement : par exemple pour l'information de maintenance entre un avion et sa base de maintenance, l'aspect privé des communications pour les VIP, pour les communications militaires, etc. Dans tous les cas, la protection des données engendre souvent une hausse des coûts de communication.

Optimiser des coûts de chiffrement ou de sécurisation de données permettrait de rendre accessible à un plus grand nombre de personnes l'accès à la protection des données tout en permettant d'avoir des prix accessibles aux consommateurs finaux ; coûts comparables voire identiques aux données non protégées.

Les solutions de chiffrement actuelles connues du Demandeur consistent, par exemple, à ouvrir un tunnel chiffré et à faire passer le trafic nécessitant d'être protégé dans ce tunnel.

Dans le cas d'un trafic demandant en plus du chiffrement une qualité de service particulière (flux phonie, vidéo, etc.) il est alors nécessaire d'utiliser une classe de service à bande garantie. Dans les systèmes Bgan, Fleetbroadband, Swiftbroadband ou sur tous les systèmes se référant à la partie de la norme 3GPP, ceci consiste en une ouverture de streaming. Pour passer le tunnel chiffré, le tunnel doit être ouvert en permanence et la totalité du trafic doit passer dans ce tunnel. Cela est particulièrement inadapté à la téléphonie, surtout en termes de coût car il est difficile de maîtriser le début et la fin d'une communication pour ouvrir et fermer le tunnel.

La tendance actuelle connue du Demandeur est d'ouvrir un tunnel global dans le Best Effort en faisant abstraction de la qualité de services, ou d'ouvrir un tunnel global associé à un flux ou « streaming » 128 Ko pour l'ensemble des communications en espérant que plusieurs communications soient établies afin d'amortir le coût du streaming.

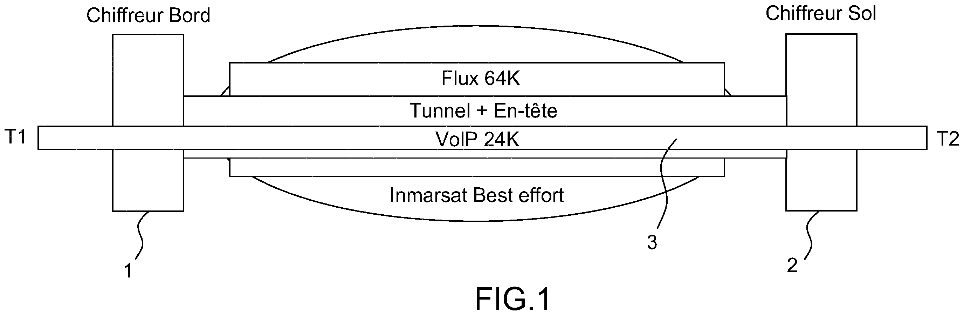

Cette tendance est schématisée à la figure 1 qui représente un premier terminal T₁, un chiffreur Bord 1 et un terminal T₂ avec chiffreur sol 2 avec un exemple de chiffrement d'artère de communication 3, où l'on représente le flux à 64 Kbits, la voix sur IP ou VoIP 24K, le tunnel + l'en-tête de chiffrement, le Best effort, dans cet exemple pris dans le domaine Inmarsat.

Le document EP1432210 décrit un mécanisme permettant de configurer un terminal satellite en fonction des flux à transmettre (QoS, chiffrement), en supposant que ces flux arrivent en clair au terminal.

Le document intitulé « BGAN and IP data connections Version 01 » BGAN solutions guide, 8 mai 2006 décrit comment opèrent les connexions dans le réseau BGAN et comment chaque terminal gère les données.

Le document de L DUQUERROY et al, intitulé « SatIPSec ; an optimized solution for securing multicast and unicast satellite transmissions », A collection of the 22nd AIAA International Communications Satellite Systems Conférence and Exhibit Technical Papers, janvier 2004, ISBN 978-7-56-347712-6, introduit le principe des mécanismes de sécurisation des données pour des transmissions satellite.

L'enseignement technique du document de Lloyd Wood et al, intitulé « IPv6 and IPsec on a satellite in space », Proceedings of the 58th International Astronautical Congress, Hyderabad, India, 24-28 September 2007, 28 septembre 2007, concerne les deux protocoles IPv6 et IPsec et ne précise pas les possibilités de chiffrement.

L'invention concerne un système pour établir de façon dynamique un ou plusieurs tunnels chiffrés pour la transmission de données entre un ensemble d'équipements bord comprenant un ou plusieurs terminaux un serveur SIP, Session Initiation Protocol, et un routeur bord et un second ensemble sol comprenant un routeur sol et des terminaux adaptés à communiquer par des réseaux à bande contrainte de type liaison satellite, ledit réseau utilisant un protocole temps réel. Le système comporte au moins les éléments suivants :
- Lesdits un ou plusieurs terminaux bord étant configurés pour transmettre un flux de données à acheminer vers un autre destinataire via un satellite S, audit serveur SIP,
- Ledit serveur SIP étant configuré pour modifier un identifiant du port de protocole temps réel sur ledit flux à chiffrer et pour le transmettre au routeur bord, ledit routeur bord comprenant un premier module de chiffrement et des règles assurant un chemin pour un flux de données identifié,
- Le premier module de chiffrement bord étant configuré pour lire l'identificateur du port du protocole temps réel présent dans une trame de données à chiffrer, et si ledit identificateur correspond à une valeur donnée contenue dans un fichier de configuration pour chiffrer le flux de données avec une clé correspondant au port identifié,
- Ledit premier module de chiffrement étant configuré pour ajouter un champ de données d'identification du flux de données chiffrées à la trame de données chiffrées,
- Le routeur bord est configuré pour appliquer des règles d'affectation de canal streaming pour transmettre le ou les flux de données chiffrées à un modem comprenant un module permettant l'ouverture d'un nombre de tunnels chiffrés égal au nombre de communications ou par type de trafic,
- Le modem Satcom étant configuré pour transmettre les différents flux de données chiffrées via les différents canaux chiffrés au satellite de communication S,
- Une station de réception en liaison avec le satellite est configurée pour distribuer les flux de données chiffrées reçues du satellite, vers le module de routage sol comprenant un module de chiffrement-déchiffrement,
- Ledit module de chiffrement-déchiffrement comprenant une table de correspondance entre la valeur contenue dans le champ identifiant un flux de données chiffrées et un numéro de port du protocole de communications temps réel et la correspondance entre une clé de déchiffrement à utiliser et la valeur du port identifié, ledit module de chiffrement-déchiffrement étant configuré pour déchiffrer les flux de données et transmettre les données déchiffrées vers un ensemble de terminaux destinataire.

Les terminaux de données sont, par exemple, des terminaux de type voix sur IP.

Le routeur est configuré pour appliquer les règles TFT, le système de communication étant un système satellitaire de type BGAN, Swiftbroadband et Fleetbroadband ou GPRS.

Un tunnel de communication peut être configuré dans un fichier template associant un trafic identifié par un port RTP, UDP à une valeur Espi correspondant à un identificateur d'un tunnel chiffré, interprété par des règles TFT.

Le premier module de chiffrement met, par exemple, en œuvre un chiffrement IPSec.

L'invention concerne aussi un procédé permettant d'établir de manière dynamique des tunnels ou canaux de communications chiffrés entre au moins deux ensembles d'équipements, l'un dit station bord comprenant un serveur SIP, Session Initiation Protocol, un ou plusieurs terminaux et un routeur bord comprenant un module de chiffrement et un second ensemble sol, dit station sol, comprenant un routeur sol comprenant un module de déchiffrement et des terminaux adaptés à communiquer par des réseaux à bande contrainte de type liaison satellite, ledit réseau utilisant un protocole de communication temps réel. Le procédé comporte au moins les étapes suivantes :
Le serveur SIP modifie un identificateur de port du protocole sur les flux de données transmises par les terminaux et les transmet au routeur bord,
1) générer un fichier de configuration qui comprend pour chaque extrémité d'un tunnel : un identificateur du port du protocole temps réel d'un flux de données à chiffrer, une clé de chiffrement, une valeur d'un identificateur du flux de données chiffrées,
2) chiffrer un flux de données au moyen du module de chiffrement, ledit module de chiffrement exécute les étapes suivantes :
   - lecture d'un identificateur du port du protocole temps réel présent dans une trame de données à chiffer et si ledit module de chiffrement trouve dans ledit fichier de configuration un élément identifiant correspondant au port identifié, le module de chiffrement chiffre le flux de données avec une clé correspondant au port identifié, le flux ainsi chiffré comprenant un champ identifiant l'adresse de destination, et un identificateur du flux de données chiffrées,
3) le routeur applique des règles d'affectation de canal streaming pour transmettre I le trafic chiffré à un modem satcom comprenant une première carte adaptées à ouvrir des canaux de communications afin de transmettre les flux chiffrés au satellite S,
4) le satellite transmet les flux chiffrés à une station sol,
5) les flux chiffrés sont reçus par le routeur sol et le module de déchiffrement du routeur sol déchiffre le flux de données en utilisant une clé de chiffrement associée audit identificateur du flux de données chiffrées dans le fichier de configuration,
6) transmettre le flux de données déchiffrées vers le destinataire.

Le procédé est notamment utilisé pour établir de manière dynamique des tunnels ou canaux de communications chiffrées entre deux terminaux.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de chiffrement d'un tunnel selon l'art antérieur entre un terminal bord T₁ et un terminal sol T₂,

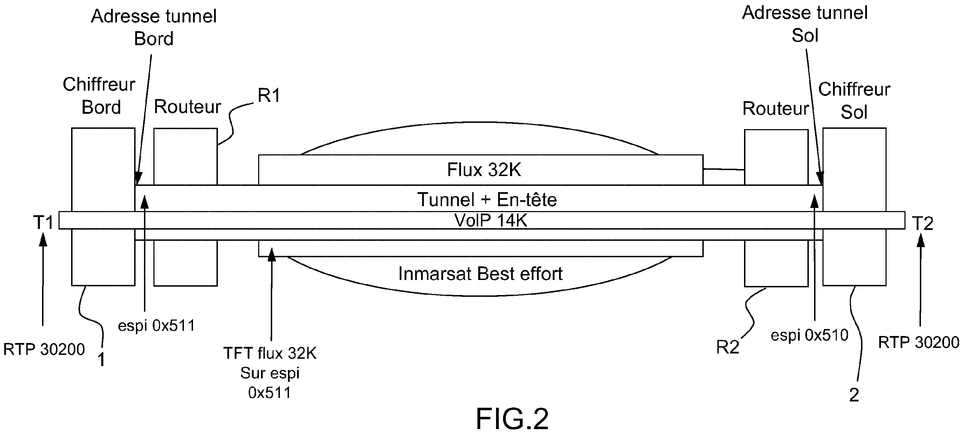

- La figure 2, un exemple d'architecture de chiffrement selon l'invention,
- La figure 3, un exemple de diagramme pour des modules du segment air,
- La figure 4, un exemple de diagramme pour des modules d'un segment sol, et
- La figure 5, l'illustration d'une communication Bout en Bout mettant en œuvre le procédé selon l'invention.

Afin de mieux faire comprendre l'invention, la description qui va suivre à titre illustratif est donnée pour un système qui utilise le protocole standard SIP précité. Les mécanismes mis en œuvre sont donc transparents pour tout terminal compatible du protocole de communication utilisé.

Le procédé et l'architecture selon l'invention reposent notamment sur le chiffrement IPSec permettant l'ouverture d'un tunnel chiffré par communication et/ou par type de trafic.

Chaque tunnel est configuré, par exemple, dans un fichier template qui associe un trafic identifié (ex Port RTP, port UDP, etc.) à une valeur « espi » identificateur hexadécimal d'un tunnel chiffré interprété par les règles TFT assurant un chemin déterminé par rapport à un flux de données identifié.

La génération des clés de chiffrement est obtenue à l'aide d'un fichier de configuration IPSec qui comprend pour chaque extrémité de tunnel :
Pour le tunnel montant, le trafic identifié, son identificateur espi associé et la clé de chiffrement,
Pour le tunnel descendant, le trafic identifié, son identificateur espi associé et la clé de chiffrement.

Le flux de données issu du premier terminal T₁ est transmis à un chiffreur Bord 1, dans cet exemple de mise en œuvre, puis passe à travers un routeur R₁ qui a notamment pour fonction de diriger correctement le flux de données vers son destinataire. La trame de flux de données comporte généralement un identificateur de l'adresse de la source émettrice, un identificateur pour l'adresse de destination finale pour la communication.

Un tunnel de communication est configuré dans un ficher template qui associe un trafic identifié (ex port RTP, port UDP, etc....) à une valeur « espi » correspondant à un identificateur d'un tunnel chiffré, interprété par les règles TFT. La trame de données comprendra un identificateur tunnel Idt.

Le chiffreur bord va vérifier l'identificateur (port RTP, port UDP) du flux de données et chiffrer les données du flux si cet identificateur correspond à une valeur (port RTP, UDP, etc.) qui est contenue dans le fichier de configuration IPSec.

Le trafic ou flux de données F_{1C} ainsi chiffré contient un champ « espi » positionné en fonction de son identification ; puis F_{1C} est affecté à une adresse de tunnel grâce au routeur R₁.

Dans le cas de la téléphonie, le procédé selon l'invention permet ainsi de chiffrer communication par communication des flux de type VoIP, et d'affecter à ces flux la qualité de service QoS adéquate, aussi bien sur un appel Outbound que sur un appel Inbound.

Pour les données ou data, le procédé permet de chiffrer les flux service par service, et d'affecter à ces flux chiffrés, la qualité de service adéquate QoS, aussi bien sur un appel Outbound que sur un appel Inbound. Ceci présente l'avantage de réduire de manière significative la bande passante consommée et donc le coût des communications.

Le procédé selon l'invention permet aussi de garantir malgré l'overhead important du tunnel IPSec que toutes les communications VoIP seront chiffrées et bénéficieront d'une qualité de service associée à un flux ou streaming 32K, par exemple. Ainsi, cette solution permet d'établir, par exemple et actuellement 7 communications voix (port RDP) simultanées par terminal quelque soit le type de vocodeur utilisé par ce terminal

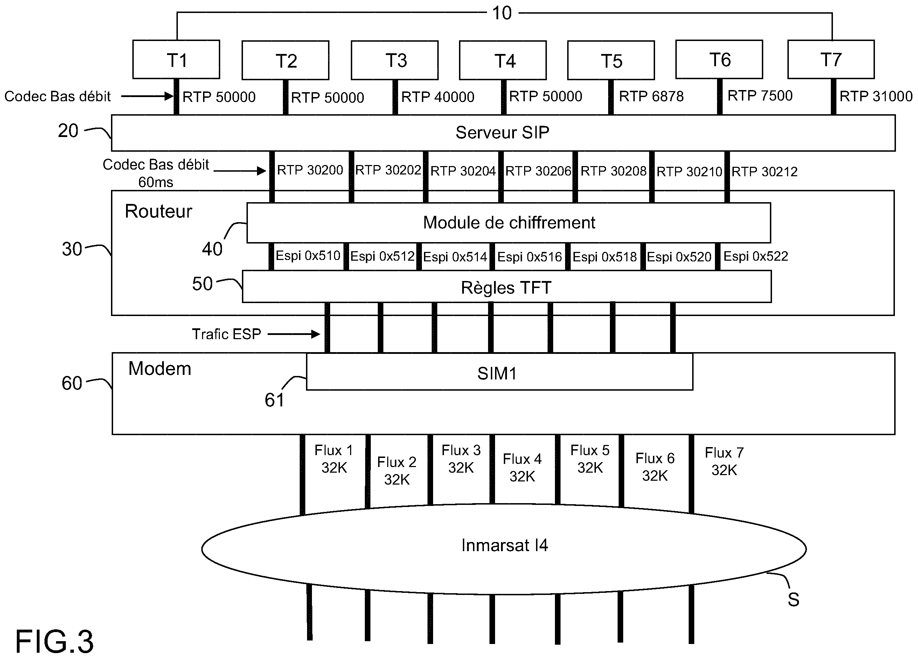

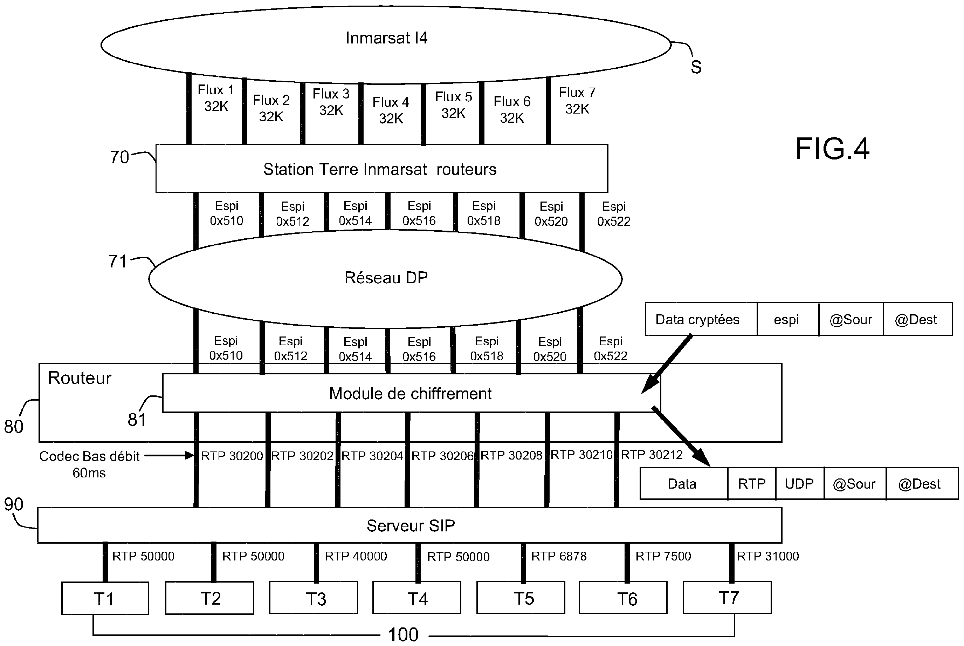

Après traversée du canal de communication 3, le trafic chiffré F_{1C} est traité au niveau du récepteur R₂ qui va déchiffrer le flux de données au niveau du chiffreur 2 sol selon un procédé détaillé aux figures 3 et 4.

La figure 3 schématise un exemple d'architecture pour le système fonctionnant dans un sens terminal vers le satellite.

Sur cette figure, plusieurs terminaux 10 désignés T₁, ..T₇ transmettent les flux de données à acheminer vers un autre destinataire via le satellite, à un serveur SIP 20.

Le serveur SIP 20 est notamment adapté à :
- Intercepter les messages de signalisation SIP,
- Modifier les numéros de ports RTP,
- Intercepter et contrôler le flux RTP entre les terminaux,
- Adapter le vocodeur à la contrainte de la bande passante chiffrée,
- Charger de contrôler le nombre de communications pouvant être établies dans le sens entrant ou sortant sur le segment satellitaire,
- Affecter les communications sur les « trunk » disponibles,
- Contrôler et interdire la possibilité d'appel émis simultanément par l'avion ou le Bord et le sol.

Le serveur SIP va transmettre les flux de données à chiffrer à un routeur 30 comprenant un premier module de chiffrement 40 et des règles TFT.

Le module de chiffrement 40 va lire l'identifiant du port RTP ou UDP présent dans la trame de données à chiffrer, puis si une référence correspond, il va chiffrer le flux de données avec une clé correspondant au port RTP ou UDP identifié en utilisant le tableau de correspondance (fichier de configuration IPSec). A ces données chiffrées, le module de chiffrement 40 ajoute dans le champ ESPI la valeur qui correspond, dans cet exemple, à une valeur hexadécimale (identificateur IPsec en fonction du numéro de port RTP ou UDP). Cette valeur ESPI est seule visible de l'Extérieur, les données du flux sont chiffrées.

Le module de chiffrement a notamment les fonctions suivantes :
- Affecter un identificateur IPsec en fonction du N° de port RTP ou UDP ou autre,
- Etablir un canal chiffré par communications VoIP ou par type de transmission de données.

Le routeur 30 va ensuite appliquer les règles TFT d'affectation de canal streaming pour transmettre le ou les flux de données chiffrées à un modem 60 comprenant par exemple 2 cartes SIM 61, une seule étant représentée sur cette figure. Une carte SIM va permettre l'ouverture de canaux de communication ou tunnel chiffré. Le modem Satcom va ensuite transmettre les différents flux de données chiffrés via les différents canaux streaming au satellite S.

Le gestionnaire des règles TFT a notamment pour fonction d'appliquer des règles TFT d'affectation de canal streaming en fonction du champ ESPI du ou des trames de données chiffrées.

La figure 4 schématise le sens inverse de transmission des données et des ouvertures de canaux du satellite vers les destinataires.

Le satellite S ayant reçu les flux chiffrés à transmettre vers des destinataires, les transmet à une station terre 70 par exemple. Le réseau DP 71 représente la distributaire partenaire offrant le contrat d'acheminement de la station-terre, satellite Inmarsat, Destinataire.

Les flux chiffrés en sortie du prestataire distributeur 71 sont ensuite transmis vers un routeur 80 comprenant un module de chiffrement 81. Le module de chiffrement comprend notamment une table de correspondance entre la valeur contenue dans le champ ESPI d'un flux de données et un numéro de port RTP. Le module de déchiffrement va déchiffrer les données du flux chiffré en utilisant la clé de chiffrement correspondant au N° de port RTP ou UDP.

Le flux de données déchiffrées va ensuite être transmis au serveur SIP qui en fonction de la valeur RTP va transmettre le flux de données au destinataire final.

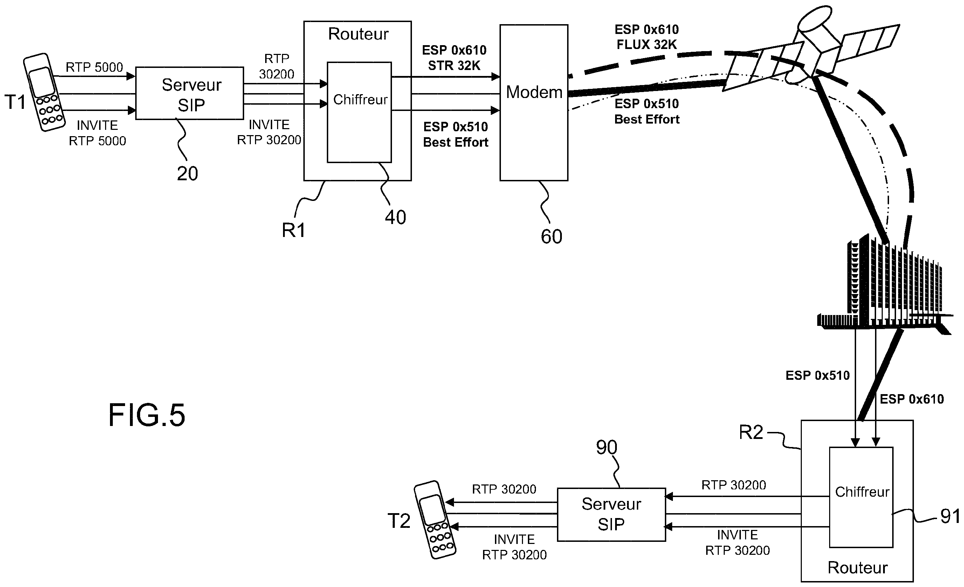

La figure 5 représente un exemple de distribution des flux de données chiffrées à partir d'un terminal T₁ vers un terminal T₂ via le satellite S et les systèmes de chiffrement et de routage décrits aux figures 3 et 4.

Un exemple de mise en œuvre est donnée pour mieux décrire le fonctionnement simplifié du système selon l'invention lors d'un appel Outbound et Inbound pour des flux VoIP chiffrés.

### Gestion de la bande passante

L'overhead IPSec étant très important, il est absolument nécessaire d'avoir la maitrise sur le type de codeur négocié et sur le cadencement des paquets.

Pour pouvoir tenir une communication VoIP dans un canal 32K avec chiffrement, la bande passante de la VoIP (IP+UDP+RTP+Payload) ne doit pas depasser 16Kbps

Cela necessite d'utiliser un vocodeur bas débit et de bonne qualité. Dans notre exemple, celui choisi et le G729 dont le cadencement est resequencé à 60ms.

### Appel Outbound

Lors de l'émission d'un appel par un terminal VoIP Oubound, le message d'appel est envoyé au serveur SIP de gestion du terminal.

Le serveur SIP répond au terminal appelant par un 100 Trying puis
- modifie le port RTP annoncé par le terminal appelant
- vérifie les vocodeurs
- adapte le vocodage
- recadence les paquets

Le message est ensuite transmis au module de chiffrement

### Module de chiffrement

Lorsqu'un paquet lui parvient, le module de chiffrement chiffre le paquet puis renseigne le champ ESP par la valeur définie dans le champ esp du fichier de configuration de tunnels. Un exemple d'application chiffrée est donné ci-après.

Ex: add *"Adresse tunnel1 bord'."Adresse tunnel1 sol"* esp 0x510
- m tunnel
- E rijndael-cbc0x0838fe4d67ef6bd0745df33d684e4ed0137ca7e3e539a0827a5e185ac9 b1b6dc
- A hmac-sha256
   0x3bd2851baf6d7e5f5197a8305ab81560bc78738b62f69a13b2a7754152b57 b24;
   spdadd *"Adresse serveur SIP Bord"*[30200] *"Adresse Serveur SIP Sol"*[30200] any -P in ipsec
   *esp*/tunnel/*"Adresse tunnel1 bord"-"Adresse tunnel1 sol"*/require; add *"."Adresse tunnel1 sol" "Adresse tunnel1 Bord"*[esp 0x511
- m tunnel
- E rijndael-cbc
   0x44cec91db77812fc014efe4474918206817bad7466a322745c21e5ca978fc 60d
- A hmac-sha256
   0x46893ee4b29ab63709a8184be4f678fd14c8b392cf1881be716764020c631 c13;
   spdadd *"Adresse Serveur SIP Sol"* [30200] *"Adresse serveur SIP Bord"* [30200] any -P out ipsec
   esp/tunnel/*"Adresse tunnel1 sol"-"Adresse tunnel1 bord'*/*require;*

Sur réception d'un paquet dont le champ ESP correspond à une règle (dans l'exemple 0x510 Outbound et 0x511 Inbound), le trafic est immédiatement affecté à un canal streaming si la ressource est disponible.

### Appel Inbound

La signalisation montante est effectuée dans le Best effort. Le routeur Bord recoit les paquets ESP et les transmet au chiffreur. Le paquet ainsi déchiffré est ensuite envoyé au serveur SIP pour tramsmission au terminal destinataire.

Au décroché du terminal du bord, le trafic RTP est établi puis envoyé au chiffreur.

En fonction de la configuration du fichier, un champ espi est affecté au traffic après chiffrement puis envoyé au routeur pour affectation d'une règle TFT.

Un flux identifié 0x510 et un flux identifié 0x511 transite dans le best effort. Ces flux ont une correspondance dans la gestion des TFT qui affecte automatiquement un canal STREAM32K à ce type de flux.

La communication est automatiquement positionnée sur le type de flux streaming

Le procédé et l'architecture système selon l'invention présentent notamment les avantages suivants :
Pour un flux entrant ou sortant, la solution permet :
- de mettre en œuvre la ressource adéquate en QoS et consommation de débit,
- de faire bénéficier le flux d'une bande passante garantie sur le segment contraint,
- de permettre la sélection des flux à chiffrer, certains pouvant ainsi rester en clair.

La solution étant basée sur du chiffrement IPSec permet l'ouverture d'un tunnel chiffré par communication et/ou par type de trafic.

Pour la téléphonie, la solution permet de chiffrer communication par communication des flux de type VoIP, et d'affecter à ces flux la qualité de service adéquate, aussi bien sur un appel Outbound, que sur un appel Inbound.

Pour la donnée ou Data, la mise en œuvre de la présente invention permet de chiffrer les flux services par services, et d'affecter à ces flux, la qualité de service QoS adéquate, aussi bien sur un appel Outbound que sur un appel Inbound. Cela permet de réduire de manière significative la bande passante consommée et donc le coût des communications.

L'objet de la présente invention garantit malgré l'overhead important du tunnel IPsec que toutes les communications VoIP seront chiffrées et bénéficieront d'une qualité de services associée à un streaming 32 K.

Le procédé et l'architecture système selon l'invention présentent notamment les avantages suivants :
Pour un flux entrant ou sortant, la solution permet :
- de mettre en œuvre la ressource adéquate en QoS et consommation de débit,
- de faire bénéficier le flux d'une bande passante garantie sur le segment contraint,
- de permettre la sélection des flux à chiffrer, certains pouvant ainsi rester en clair.

La solution étant basée sur du chiffrement IPSec permet l'ouverture d'un tunnel chiffré par communication et/ou par type de trafic.

Pour la téléphonie, la solution permet de chiffrer communication par communication des flux de type VoIP, et d'affecter à ces flux la qualité de service adéquate, aussi bien sur un appel Outbound, que sur un appel Inbound.

Pour la donnée ou Data, la mise en œuvre de la présente invention permet de chiffrer les flux services par services, et d'affecter à ces flux, la qualité de service QoS adéquate, aussi bien sur un appel Outbound que sur un appel Inbound. Cela permet de réduire de manière significative la bande passante consommée et donc le coût des communications.

L'objet de la présente invention garantit malgré l'overhead important du tunnel IPsec que toutes les communications VoIP seront chiffrées et bénéficieront d'une qualité de services associée à un streaming 32 K.

## Revendications

1. Système pour établir de façon dynamique un ou plusieurs tunnels chiffrés pour la transmission de données entre un ensemble d'équipements bord comprenant un ou plusieurs terminaux (10), un serveur SIP, Session Initiation Protocol, (20), et un routeur bord (30) et un second ensemble sol comprenant un routeur sol (80) et des terminaux (100) adaptés à communiquer par des réseaux à bande contrainte de type liaison satellite, ledit réseau utilisant un protocole de communication temps réel, ledit système comportant au moins les éléments suivants :
• Lesdits un ou plusieurs terminaux (10) bord étant configurés pour transmettre un flux de données à acheminer vers un autre destinataire via un satellite S, audit serveur SIP (20),
• Ledit serveur SIP (20) étant configuré pour modifier un identifiant du port du protocole temps réel sur ledit flux à chiffrer et pour le transmettre au routeur (30), ledit routeur bord (30) comprenant un premier module de chiffrement (40) et des règles assurant un chemin pour un flux de données identifié,
• Le premier module de chiffrement (40) bord étant configuré pour lire l'identificateur du port du protocole temps réel présent dans une trame de données à chiffrer, et si ledit identificateur correspond à une valeur donnée contenue dans un fichier de configuration, pour chiffrer le flux de données avec une clé correspondant au port identifié,
• Ledit premier module de chiffrement (40) étant configuré pour ajouter un champ de données d'identification du flux de données chiffrées à la trame de données chiffrées,
• Le routeur bord (30) étant configuré pour appliquer des règles d'affectation de canal streaming pour transmettre le ou les flux de données chiffrées à un modem Satcom (60) comprenant un module permettant l'ouverture d'un nombre de tunnels chiffrés égal au nombre de communications ou par type de trafic,
• Le modem Satcom étant configuré pour transmettre les différents flux de données chiffrées via les différents canaux chiffrés au satellite de communication S,
• Une station de réception (70) en liaison avec le satellite est configurée pour distribuer les flux de données chiffrées reçues du satellite vers le module de routage sol (80) comprenant un module de chiffrement-déchiffrement (81),
• Ledit module de chiffrement-déchiffrement (81) comprenant une table (82) de correspondance entre la valeur contenue dans le champ identifiant un flux de données chiffré et un numéro de port du protocole de communications temps réel et la correspondance entre une clé de déchiffrement à utiliser et la valeur du port identifié, ledit module de chiffrement-déchiffrement (81) étant configuré pour déchiffrer les flux de données et transmettre les données déchiffrées vers un ensemble de terminaux destinataire.

2. Système selon la revendication 1 **caractérisé en ce que** les terminaux de données sont des terminaux de type voix sur IP.

3. Système selon la revendication 1 **caractérisé en ce que** le routeur (30) est configuré pour appliquer les règles TFT, le système de communication étant un système satellitaire de type BGAN, Swiftbroadband et Fleetbroadband ou GPRS.

4. Système selon la revendication 1 **caractérisé en ce qu'**un tunnel de communication est configuré dans un fichier template associant un trafic identifié par un port RTP, UDP à une valeur Espi correspondant à un identificateur d'un tunnel chiffré, interprété par des règles TFT.

5. Système selon la revendication 1 **caractérisé en ce que** le premier module de chiffrement met en œuvre un chiffrement IPSec.

6. Procédé permettant d'établir de manière dynamique des tunnels ou canaux de communications chiffrés entre au moins deux ensembles d'équipements, l'un dit station bord comprenant un serveur SIP, Session Initiation Protocol, (20), un ou plusieurs terminaux (10) et un routeur bord (30) comprenant un module de chiffrement (40), et un second ensemble sol, dit station sol, comprenant un routeur sol (80) comprenant un module de déchiffrement (81) et des terminaux adaptés à communiquer par des réseaux à bande contrainte de type liaison satellite, ledit réseau utilisant un protocole de communication temps réel, ledit procédé comportant au moins les étapes suivantes :
Le serveur SIP (20) modifie un identificateur de port du protocole sur les flux de données transmises par les terminaux (10) et les transmet au routeur bord (30),
1) générer un fichier de configuration qui comprend pour chaque extrémité d'un tunnel : un identificateur du port du protocole temps réel d'un flux de données à chiffrer, une clé de chiffrement, une valeur d'un identificateur du flux de données chiffrées,
2) chiffrer un flux de données au moyen du module de chiffrement (40), le module de chiffrement exécutant les étapes suivantes :
- lecture d'un identificateur du port du protocole temps réel présent dans une trame de données à chiffrer et si ledit module de chiffrement trouve dans ledit fichier de configuration un élément identifiant correspondant au port identifié, le module de chiffrement chiffre le flux de données avec une clé correspondant au port identifié, le flux ainsi chiffré comprenant un champ identifiant l'adresse de destination et un identificateur du flux de données chiffrées,
3) le routeur (30) applique des règles d'affectation de canal streaming pour transmettre le trafic chiffré à un modem Satcom (60) comprenant une première carte (61) adaptées à ouvrir des canaux de communications afin de transmettre les flux chiffrés au satellite S,
4) le satellite S transmet les flux chiffrés à une station sol (70),
5) les flux chiffrés sont reçus par le routeur sol (80) et le module de déchiffrement du routeur sol (81) déchiffre le flux de données en utilisant une clé de chiffrement associée audit identificateur du flux de données chiffrées dans le fichier de configuration,
6) transmettre le flux de données déchiffrées vers le destinataire.

7. Procédé selon la revendication 6 **caractérisé en ce que** l'on réalise l'établissement de manière dynamique des tunnels ou canaux de communications chiffrées entre deux terminaux.

## Patentansprüche

1. System zum dynamischen Herstellen von einem oder mehreren verschlüsselten Tunneln für die Übertragung von Daten zwischen einem Satz von Bordgeräten umfassend ein oder mehrere Terminals (10), einen SIP-Server, Session Initiation Protocol, (20), und einen Bord-Router (30), und einem zweiten Satz von Bodengeräten umfassend einen Boden-Router (80) und Terminals (100), die zum Kommunizieren über Netzwerke mit eingeschränktem Band des Satellitenverbindungstyps ausgelegt sind, wobei das Netzwerk ein Echtzeit-Kommunikationsprotokoll benutzt, wobei das System mindestens die folgenden Elemente umfasst:
• wobei die ein oder mehreren Bord-Terminals (10) konfiguriert sind, um einen Fluss von Daten, welche über einen Satelliten S zu einem anderen Ziel zu leiten sind, zu dem SIP-Server (20) zu übertragen,
• wobei der SIP-Server (20) zum Modifizieren eines Identifikators des Ports des Echtzeitprotokolls auf dem zu verschlüsselten Fluss und zum Übertragen desselben zum Router (30) konfiguriert ist, wobei der Bord-Router (30) ein erstes Verschlüsselungsmodul (40) und Regeln umfasst, die einen Weg für einen identifizierten Datenfluss gewährleisten,
• wobei das erste Verschlüsselungsmodul (40) zum Lesen des Identifikators des Ports des in einem zu verschlüsselnden Daten-Frame vorhandenen Echtzeitprotokolls und, wenn der Identifikator einem in einer Konfigurationsdatei enthaltenen Datenwert entspricht, zum Verschlüsseln des Datenflusses mit einem Schlüssel entsprechend dem identifizierten Port konfiguriert ist,
• wobei das erste Verschlüsselungsmodul (40) zum Hinzufügen eines Feldes von Identifikationsdaten des verschlüsselten Datenflusses zu dem verschlüsselten Daten-Frame konfiguriert ist,
• wobei der Bord-Router (30) zum Anwenden von Regeln für die Zuweisung von Streaming-Kanälen zum Übertragen des einen verschlüsselten Datenflusses oder der verschlüsselten Datenflüsse zu einem Satcom-Modem (60) konfiguriert ist, das ein Modul umfasst, das das Öffnen einer Anzahl von verschlüsselten Tunneln von der gleichen Anzahl von Kommunikationen oder nach Verkehrstyp zulässt,
• wobei das Satcom-Modem zum Übertragen der unterschiedlichen verschlüsselten Datenflüsse über die verschiedenen verschlüsselten Kanäle zum Kommunikationssatelliten S konfiguriert ist,
• eine Empfangsstation (70) in Verbindung mit dem Satelliten ist zum Verteilen der von dem Satelliten empfangenen verschlüsselten Datenflüsse zu dem Boden-Routing-Modul (80) konfiguriert, das ein Ver-/Entschlüsselungsmodul (81) umfasst,
• wobei das Ver-/Entschlüsselungsmodul (81) eine Tabelle (82) der Korrespondenz zwischen dem Wert, der in dem einen verschlüsselten Datenfluss identifizierenden Feld enthalten ist, und einer Portzahl des Echtzeit-Kommunikationsprotokolls und der Korrespondenz zwischen einem zu benutzenden Entschlüsselungsschlüssel und dem Wert des identifizierten Ports umfasst, wobei das Ver-/Entschlüsselungsmodul (81) zum Entschlüsseln der Datenflüsse und zum Übertragen der entschlüsselten Daten zu einem Satz von Zielterminals konfiguriert ist.

2. System nach Anspruch 1, **dadurch gekennzeichnet, dass** die Datenterminals Terminals des VoIP-Typs sind.

3. System nach Anspruch 1, **dadurch gekennzeichnet, dass** der Router (30) zum Anwenden der TFT-Regeln konfiguriert ist, wobei das Kommunikationssystem ein Satellitensystem des Typs BGAN, Swiftbroadband und Fleetbroadband oder GPRS ist.

4. System nach Anspruch 1, **dadurch gekennzeichnet, dass** ein Kommunikationstunnel in einer Schablonendatei konfiguriert ist, die einen Verkehr, identifiziert durch einen Port RTP, UDP mit einem Espi-Wert entsprechend einem Identifikator eines verschlüsselten Tunnels assoziiert, interpretiert nach TFT-Regeln.

5. System nach Anspruch 1, **dadurch gekennzeichnet, dass** das erste Verschlüsselungsmodul eine IPSec-Verschlüsselung durchführt.

6. Verfahren, das das dynamische Herstellen von verschlüsselten Kommunikationstunneln oder -kanälen zwischen mindestens zwei Gerätesätzen zulässt, einer Bord-Station die einen SIP-Server, Session Initiation Protocol (20), ein oder mehrere Terminals (10) und einen Bord-Router (30) umfasst, der ein Verschlüsselungsmodul (40) umfasst, und einem zweiten Boden-Satz, genannt Bodenstation, umfasst, der einen Boden-Router (80) der ein Entschlüsselungsmodul (81) und Terminals umfasst, umfasst, ausgelegt zum Kommunizieren über Netzwerke mit eingeschränktem Band des Satellitenverbindungstyps, wobei das Netzwerk ein Echtzeit-Kommunikationsprotokoll nutzt, wobei das Verfahren mindestens die folgenden Schritte umfasst:
Modifizieren eines Portidentifikators des Protokolls auf den von den Terminals (10) übertragenen Datenflüssen und Übertragen derselben zum Bord-Router (30), durch den SIP-Server (20),
1) Erzeugen einer Konfigurationsdatei, die für jedes Ende eines Tunnels einen Identifikator des Ports des Echtzeitprotokolls eines zu verschlüsselnden Datenflusses, einen Verschlüsselungsschlüssel, einen Wert eines Identifikators des verschlüsselten Datenflusses umfasst,
2) Verschlüsseln eines Datenflusses mittels des Verschlüsselungsmoduls (40), wobei das Verschlüsselungsmodul die folgenden Schritte ausführt:
- Lesen eines Identifikators des Ports des in einem zu verschlüsselnden Daten-Frame vorhandenen Echtzeitprotokolls und, wenn das Verschlüsselungsmodul in der Konfigurationsdatei ein Identifikationselement entsprechend dem identifizierten Port findet, Verschlüsseln, durch das Verschlüsselungsmodul, des Datenflusses mit einem Schlüssel entsprechend dem identifizierten Port, wobei der so verschlüsselte Fluss ein die Zieladresse identifizierendes Feld und einen Identifikator des verschlüsselten Datenflusses umfasst,
3) der Router (30) wendet Regeln für die Zuweisung von Streaming-Kanälen zum Übertragen des verschlüsselten Verkehrs zu einem Satcom-Modem (60) an, der eine erste Karte (61) umfasst, die zum Öffnen der Kommunikationskanäle ausgelegt ist, um die verschlüsselten Flüsse zum Satelliten S zu übertragen,
4) der Satellit S überträgt die verschlüsselten Flüsse zu einer Bodenstation (70),
5) die verschlüsselten Flüsse werden vom Boden-Router (80) empfangen und das Entschlüsselungsmodul des Boden-Routers (81) entschlüsselt den Datenfluss mittels eines Verschlüsselungsschlüssels, der mit dem Identifikator des verschlüsselten Datenflusses in der Konfigurationsdatei assoziiert ist,
6) Übertragen des Flusses von entschlüsselten Daten zum Ziel.

7. Verfahren nach Anspruch 6, **dadurch gekennzeichnet, dass** ein dynamisches Herstellen der verschlüsselten Kommunikationstunnels oder -kanäle zwischen zwei Terminals realisiert wird.

## Claims

1. System for dynamically establishing one or more encrypted tunnels for the transmission of data between a set of on-board equipment comprising one or more terminals (10), a SIP server, Session Initiation Protocol, (20), and an onboard router (30) and a second ground assembly comprising a ground router (80) and terminals (100) adapted to communicate by constrained band networks of the satellite link type, said network using a real time communication protocol, said system comprising at least the following:
• said one or more terminals (10) on board being configured to transmit a data stream to be routed to another recipient via a satellite S, to said SIP server (20),
• said SIP server (20) being configured to modify an identifier of the port of the real-time protocol on said stream to be encrypted and to transmit it to the router (30), said onboard router (30) comprising a first encryption module (40) and rules ensuring a path for an identified data flow,
• the first onboard encryption module (40) being configured to read the identifier of the real-time protocol port present in a data frame to be encrypted, and if said identifier corresponds to a given value contained in a configuration file, to encrypt the data flow with a key corresponding to the identified port,
• said first encryption module (40) being configured to add an identification data field of the encrypted data stream to the encrypted data frame,
• the onboard router (30) being configured to apply streaming channel assignment rules to transmit the encrypted data stream(s) to a Satcom modem (60) comprising a module allowing the opening of a number of encrypted tunnels equal to the number of communications or by type of traffic,
• the Satcom modem being configured to transmit the different encrypted data streams via the different encrypted channels to the communication satellite S,
• a reception station (70) linked to the satellite is configured to distribute the encrypted data streams received from the satellite to the ground routing module (80) comprising an encryption-decryption module (81),
• said encryption-decryption module (81) comprising a table (82) of correspondence between the value contained in the field identifying an encrypted data stream and a port number of the real-time communications protocol and the correspondence between a decryption key to be used and the value of the port identified, said encryption-decryption module (81) being configured to decrypt the data streams and transmit the decrypted data to a set of destination terminals.

2. System according to claim 1 **characterized in that** the data terminals are voice over IP type terminals.

3. System according to claim 1 **characterized in that** the router (30) is configured to apply the TFT rules, the communication system being a satellite system of the BGAN, Swiftbroadband and Fleetbroadband or GPRS type.

4. System according to claim 1, **characterized in that** a communication tunnel is configured in a template file associating traffic identified by an RTP port, UDP having a value Espi corresponding to an identifier of an encrypted tunnel, interpreted by rules TFT.

5. System according to claim 1 **characterized in that** the first encryption module implements IPSec encryption.

6. Method for dynamically establishing encrypted communication tunnels or channels between at least two sets of equipment, one said on-board station comprising a SIP server, Session Initiation Protocol, (20), one or more terminals (10) and an onboard router (30) comprising an encryption module (40), and a second ground assembly, called a ground station, comprising a ground router (80) comprising a decryption module (81) and terminals adapted for communicating by constrained band networks of the satellite link type, said network using a real-time communication protocol, said method comprising at least the following steps:
the SIP server (20) modifies a port identifier of the protocol on the data flows transmitted by the terminals (10) and transmits them to the onboard router (30),
1) generate a configuration file which comprises for each end of a tunnel: an identifier of the port of the real time protocol of a data stream to be encrypted, an encryption key, a value of an identifier of the encrypted data stream ,
2) encrypt a data stream by means of the encryption module (40), the encryption module executing the following steps:
reading of an identifier of the port of the real-time protocol present in a data frame to be encrypted and if said encryption module finds in said configuration file an identifying element corresponding to the identified port, the encryption module encrypts the data stream with a key corresponding to the identified port, wherein the thus encrypted flow comprises a field identifying the destination address and an identifier of the encrypted data flow,
3) the router (30) applies streaming channel allocation rules to transmit the encrypted traffic to a Satcom modem (60) comprising a first card (61) adapted to open communication channels in order to transmit the encrypted flows to the satellite S,
4) the satellite S transmits the encrypted streams to a ground station (70),
5) the encrypted streams are received by the ground router (80) and the decryption module of the ground router (81) decrypts the data stream using an encryption key associated with said identifier of the encrypted data stream in the configuration file,
6) transmit the decrypted data stream to the recipient.

7. Method according to claim 6 **characterized in that** the establishment of dynamic way tunnels or encrypted communication channels between two terminals is accomplished.
